# FASCICULE DE BREVET EUROPEEN

(11) **EP 2 219 845 B1**
(45) Date de publication et mention de la délivrance du brevet: **13.04.2016**
(21) Numéro de dépôt: 08871444.9
(22) Date de dépôt: 24.10.2008
(51) Int. Cl.: B29C 45/06, B29C 45/14

(54) **FLACON, NOTAMMENT POUR MASCARA, COMPORTANT UNE ETIQUETTE AVEC DES PROPRIÉTÉS BARRIÈRE ET PROCÉDÉ DE FABRICATION**
FLAKON, INSBESONDERE FÜR WIMPERNTUSCHE, MIT EINEM ETIKETT MIT BARRIEREEIGENSCHAFTEN UND VERFAHREN ZUR HERSTELLUNG
BOTTLE, ESPECIALLY FOR MASCARA, COMPRISING A LABEL HAVING BARRIER PROPERTIES, AND PRODUCTION METHOD

(30) Priorité: 26.10.2007 FR 0707537
(43) Date de publication de la demande: 25.08.2010
(73) Titulaire: Albéa Services, 92230 Gennevilliers (FR)
(72) Inventeur: CRUTCHLEY, Edward Brooke, Kent TN3 0YA (GB)
(74) Mandataire: Gevers & Orès
(86) Numéro de dépôt international: PCT/FR2008/001505
(87) Numéro de publication internationale: WO 2009/092878

(56) Documents cités:
- WO-A-2006/027227
- WO-A-2007/036302
- JP-A- 9 141 180
- JP-A- 2006 056 559
- KR-A- 20060 035 625
- US-A- 3 172 571
- US-A- 5 141 347
- US-B1- 6 276 856

## Description

La présente demande revendique la priorité de la demande française N° 07 07537 déposée le 26 octobre 2007.

### DOMAINE TECHNIQUE

L'invention concerne un flacon pour produit cosmétique contenant au moins un solvant volatile et plus particulièrement un flacon pour mascara. L'invention concerne également un distributeur applicateur de mascara et un procédé de fabrication d'un flacon pour produit cosmétique.

### ETAT DE LA TECHNIQUE

Un tel flacon comprend communément une ouverture et une paroi latérale rigide moulée en une matière plastique ou polymère comprenant une surface latérale intérieure en contact avec le produit cosmétique et une surface latérale extérieure sur laquelle est fixée une étiquette.

La matière plastique est préférée au métal ou au verre pour la fabrication de flacons de mascara car elle est légère, ne casse pas, a un cout relativement faible et est facile à utiliser pour une fabrication industrielle. Aussi, les flacons de mascara sont aujourd'hui moulés par injection soufflage ou extrusion soufflage de manière à obtenir des flacons comportant à la fois une paroi latérale, un goulot et un fond intégrés. Le soufflage permet d'obtenir un fond plein et un goulot comportant une ouverture de diamètre inférieur au diamètre de la paroi latérale pour recevoir un essoreur pour un applicateur du mascara. L'avantage de tels moulages par soufflage par rapport à par exemple un moulage par injection est qu'il n'est pas nécessaire de fixer une extrémité séparée, c'est-à-dire un fond et/ou un goulot, sur la paroi latérale pour former le flacon.

Avec la sophistication croissante des formules de mascara, et en particulier l'usage croissant de mascara dits « waterproof » à base de solvants volatiles par exemple de type alcools ou composés hydrocarbonés tel que l'isododécane, il existe un besoin croissant pour des flacons pour mascara présentant de bonnes propriétés barrières contre les solvants volatiles.

De manière à limiter les pertes en solvant volatile par migration ou évaporation à travers les parois du flacon et éviter ainsi un assèchement du mascara, il est actuellement nécessaire de choisir judicieusement la matière plastique constitutive du flacon en fonction de ses propriétés barrières au solvant volatile et de sa compatibilité avec la formulation du mascara.

Il est ainsi connu d'utiliser certains grades de polyamides ou de polyester pour fabriquer des flacons de mascara du fait de leurs propriétés barrières aux solvants volatiles non-polaire. De telles matières plastiques sont toutefois couteuses.

Une autre solution connue consiste à coextruder différentes couches de matière plastique, par exemple trois couches, avec une couche intermédiaire comportant de bonnes propriétés barrières au solvant volatile, par exemple en EVOH, pour la fabrication du flacon de mascara. En plus d'induire un coût élevé, cette coextrusion multicouche rend le procédé de moulage compliqué et peu fiable, aboutissant à une qualité générale de flacon inférieure, notamment en termes de tolérance sur le dimensionnement du goulot ou d'esthétisme au niveau des lignes de jointure.

Le document US5141347A décrit un flacon pour produit cosmétique tel que du mascara sur lequel est collée une étiquette, le document JP2006056559A décrit un récipient dont les parois sont dotées d'un film imperméable aux gaz, le document JP09141180A décrit un stylo comprenant un film imperméable aux gaz, le document WO2006027227A décrit un flacon comprenant une étiquette imperméable à l'oxygène et le document US6276856B1 décrit un flacon comprenant un bâton de rouge à lèvre comprenant des produits volatiles.

Un but de la présente invention est par conséquent de résoudre les inconvénients énoncés ci-dessus et de proposer un autre type de flacon présentant des propriétés barrières améliorés au solvant volatile contenu dans le produit cosmétique, tout en limitant le coût du flacon.

Un autre but de la présente invention est de proposer un flacon dans lequel l'étape de contrôle de la compatibilité du flacon avec le produit cosmétique et de contrôle des propriétés barrières peut être réduite.

Un autre but de la présente invention est de proposer un flacon présentant à la fois de bonnes propriétés barrières aux solvants volatiles et à l'eau.

### OBJET DE L'INVENTION

A cet effet, la présente invention a pour objet un flacon pour produit cosmétique contenant au moins un solvant volatile, notamment pour mascara, selon la revendication 1, le flacon comprenant une ouverture et une paroi latérale rigide moulée en une matière plastique comprenant une surface latérale intérieure en contact avec ledit produit cosmétique et une surface latérale extérieure sur laquelle est fixée une étiquette, dans lequel l'étiquette présente des propriétés barrières au solvant volatile.

L'étiquette sert alors, outre sa fonction de support d'information ou de décoration, à assurer à la paroi latérale du flacon une bonne propriété barrière au solvant volatile. Selon un mode de réalisation préféré de l'invention, cette étiquette recouvre toute ladite surface latérale extérieure de manière à maximiser la surface de la paroi latérale présentant une propriété barrière au solvant volatile. Comme les flacons de mascara ont généralement un diamètre avoisinant les 17 mm pour une longueur avoisinant les 80 mm, la paroi latérale représente environ 90% de la surface d'échange du flacon, de sorte qu'améliorer les propriétés barrières de la paroi latérale revient à améliorer fortement les propriétés barrières du flacon dans son ensemble. Avantageusement, il n'est plus nécessaire d'utiliser une matière plastique ou une structure plastique multicouche possédant des propriétés barrières au solvant volatile contenu dans le produit cosmétique pour former cette paroi latérale, la barrière au solvant volatile étant assurée par l'étiquette, de sorte qu'il est possible de limiter les coûts matières pour former le flacon. Il est par conséquent possible d'utiliser toute matière plastique, de préférence à bas coût, pour former la paroi latérale d'un flacon destiné à recevoir un produit cosmétique contenant un solvant volatile, quelques soient les propriétés barrières au solvant volatile de cette matière plastique, dès lors que cette matière plastique est compatible avec le produit cosmétique.

Il est par conséquent possible d'utiliser du polyéthylène haute densité (PEHD) pour former la paroi latérale d'un flacon destiné à recevoir un produit cosmétique contenant un solvant volatile malgré les mauvaises propriétés barrières du PEHD aux solvants volatiles en générale. Outre son coût raisonnable, le PEHD présente l'avantage d'être inerte et donc compatible avec les composés utilisés dans les formulations de produit cosmétique. De nombreux tests de compatibilités du produit cosmétique avec le flacon peuvent par conséquent être évités ou réduits. Aussi, le PEHD présente en outre de bonnes propriétés barrières à l'eau de sorte qu'un flacon comportant une paroi en PEHD recouverte d'une étiquette barrière aux solvants volatiles présente des propriétés barrières universelles, c'est-à-dire à la fois à l'eau et aux solvants volatiles, et peut recevoir tout type de produit cosmétique sans qu'il soit nécessaire de se soucier de l'évaporation du produit cosmétique. Par bonnes propriétés barrières à l'eau, on entend dans le domaine du mascara que de l'eau enfermée pendant 3 mois à 40°C dans la matière plastique testée subit une perte de poids inférieure à 2%.

Selon un mode de réalisation préféré de l'invention, l'étiquette comporte une couche externe de décoration et/ou de protection, une couche intermédiaire barrière au solvant volatile et une couche interne adhésive.

La couche intermédiaire barrière peut comprendre une barrière physique telle qu'une couche d'aluminium qui forme une barrière totale aux solvants volatiles, mais également à l'eau. Un tel flacon a par conséquent des propriétés barrières universelles et permet la non évaporation de toute formulation de mascara stockée en son sein.

Cette barrière physique peut encore être formée par un film métallisé, par exemple un film couvert d'un revêtement déposé par déposition physique en phase vapeur plus connu sous le nom de dépôt PVD (« Physical Vapor deposition »). Un film recouvert d'une fine couche de SiOx (10 à 100 nanomètres) convient parfaitement pour cette application.

La couche intermédiaire barrière peut sinon comprendre un polymère barrière tel que l'EVOH qui forme une barrière connue aux solvants volatiles. Ce polymère barrière peut encore être choisi parmi une résine acétale, du PET, du PVC, un mélange de PEHD/EVOH ou du polyéthylène ayant subit une fluorisation.

La couche adhésive est de préférence constituée de la même matière que la paroi latérale ou d'une matière compatible avec la matière de la paroi latérale.

La couche externe peut être de préférence une couche de Polyéthylène téréphtalate (PET), de polyethylène (PE) ou de polypropylène (PP), portant une impression sur sa face en regard de la couche intermédiaire.

Lorsque la couche adhésive est constituée d'une polyoléfine, on utilise avantageusement une polyoléfine (PE ou PP) pour former la couche externe de manière à ce que la couche adhésive adhère correctement sur la couche externe lorsqu'il y a chevauchement des bords de l'étiquette.

Selon l'invention le flacon comprend une paroi latérale et au moins une extrémité, la paroi latérale et ladite extrémité étant constituées de matières plastiques différentes, la matière plastique de ladite extrémité ayant des propriétés barrières au solvant volatile supérieures à la matière plastique de la paroi latérale. Un flacon comporte, outre sa paroi latérale, deux extrémités constituées par un goulot formant une ouverture et un fond opposé à cette ouverture. Les extrémités n'étant pas recouvertes par l'étiquette, il est particulièrement avantageux de mouler une des deux extrémités - ou les deux extrémités - séparément de la paroi latérale en utilisant une matière plastique ayant des propriétés barrières au solvant volatile meilleures que la matière plastique de la paroi latérale et en rassemblant la paroi latérale et l'extrémité - ou les extrémités - pour former le flacon. Les propriétés barrières du flacon sont alors améliorées. Le surcoût matière pour l'utilisation de matières plastiques ayant des propriétés barrières appropriées et/ou les difficultés de moulage avec de telles matières plastiques sont ainsi avantageusement limitées à ladite extrémité et non au flacon dans son ensemble. Avantageusement, la paroi latérale peut être moulée par injection avec une des extrémités, tandis que l'autre extrémité, comportant les meilleures propriétés barrières est rapportée. L'extrémité rapportée est de préférence le fond du flacon puisque le fond du flacon comporte communément une plus grande surface d'échange que le goulot.

Selon un mode de réalisation préféré, la matière plastique de l'extrémité a des propriétés barrières élevées, de sorte que le solvant volatile enfermé dans cette matière plastique pendant 3 mois à 40°C subit une perte de poids inférieure à 3%. Un tel degré d'étanchéité est approprié pour des applications mascara.

Aussi, la base de la matière plastique de ladite extrémité peut être choisie parmi une résine acétale, du PET, un mélange de PEHD/EVOH,du polyéthylène ayant subit une fluorisation ou du PVC. Le mélange de PEHD/EVOH est particulièrement apprécié pour ses propriétés barrières conjointes à l'eau et aux solvants volatiles.

Selon différents modes de réalisation préférés ;
- - la matière plastique de la paroi latérale peut en outre présenter avantageusement des propriétés barrières à l'eau élevées, de sorte que de l'eau enfermée dans cette matière plastique pendant 3 mois à 40°C subit une perte de poids inférieure à 2% ; il existe en effet un besoin pour un flacon présentant à la fois de bonnes propriétés barrières à l'eau et aux solvants pour servir de flacon à usage universelle ou pour contenir des mascaras contenant à la fois des solvants volatiles et de l'eau ;
- - la base de la matière plastique de la paroi latérale est choisie parmi le PEHD ou le Polyacide lactique (PLA) ;
- - la matière plastique de la paroi latérale est une matière plastique inerte avec le produit cosmétique choisie parmi du PP, du PE, des matières biodégradables ou un mélange de PP/matière biodégradable ou PE matière biodégradable ;
- - la paroi latérale est constituée de PEHD et le fond est constitué de PEHD/EVOH ;
- - la paroi latérale est moulée par injection et l'étiquette est fixée sur ladite surface latérale extérieure lors du moulage par injection de la paroi latérale par une technique de moulage d'étiquette dans le moule ; le fait que l'étiquette recouvre la surface de la paroi latérale et soit posée par moulage par injection permet de diminuer l'épaisseur des parois latérales tout en ayant les mêmes caractéristiques de rigidité et de résistance que précédemment; l'épaisseur de la paroi latérale, communément comprise entre 0.8 et 1 mm peut alors être réduite à une épaisseur inférieure à 0.8mm, ce qui permet de diminuer les coûts de matière première; le moulage d'étiquette dans le moule permet par ailleurs d'obtenir une qualité d'adhésion et esthétisme très supérieure à ce que l'on peut obtenir avec un simple encollage.

Selon encore un autre mode de réalisation de l'invention, le flacon comporte en outre un fond couvert d'une seconde étiquette ayant des propriétés barrières au solvant volatile. L'évaporation des solvants volatiles contenus dans le flacon est alors avantageusement empêchée au niveau de la paroi latérale par l'étiquette recouvrant la surface latérale extérieure et par le fond par cette seconde étiquette.

L'invention s'étend également à un distributeur de mascara, comprenant :
- un flacon tel que définit ci-dessus destiné à recevoir du mascara ;
- un essoreur disposé dans l'ouverture du flacon ; et
- un moyen de fermeture de ladite ouverture comprenant un moyen de préhension, une tige et un moyen d'application du mascara.

Enfin, l'invention s'étend également à un procédé de fabrication d'un flacon pour produit cosmétique comportant des solvants volatiles, notamment pour mascara, selon la revendication 14, le flacon ayant au moins une portion de paroi latérale en matière plastique moulée recouverte par une étiquette, et comprenant les étapes consistant à :
- fournir une étiquette présentant des propriétés barrières aux solvants volatiles et comportant une couche externe de décoration ou de protection, une couche intermédiaire barrière aux solvants volatiles et une couche interne adhésive ;
- insérer ladite étiquette dans un moule ;
- injecter ladite matière plastique dans le moule de manière à réaliser un moulage d'étiquette dans le moule.

Une telle fabrication par moulage d'étiquette dans le moule permet de limiter le nombre d'opérations successives à effectuer pour obtenir le flacon et notamment le collage d'étiquette sur la paroi latérale comme cela est communément effectué.

Pour qu'un tel procédé soit viable économiquement, il faut toutefois que la fabrication par moulage d'étiquette dans le moule soit effectuée à haute cadence.

L'invention sera mieux comprise aux moyens de la description qui suit et des figures annexées données à titre d'exemple non limitatif.

### BREVE DESCRIPTION DES DESSINS

La figure 1 illustre en perspective vue de dessus un flacon et une étiquette destinée à être posée sur la surface latérale du flacon.
La figure 2 est une vue en coupe d'un distributeur de mascara.
La figure 3 illustre de façon schématique une étiquette.
La figure 4 illustre en perspective de dessus un flacon comportant un fond rapporté sur la paroi latérale.
La figure 5 est une vue en coupe d'une portion du flacon de la figure 4 et représente de façon schématique un moyen d'assemblage du fond sur la paroi latérale.
La figure 6 illustre en perspective de dessus un flacon comportant un goulot rapporté sur la paroi latérale.
La figure 7 est une vue en coupe d'une portion du flacon de la figure 6 et représente de façon schématique un moyen d'assemblage du goulot sur la paroi latérale.
La figure 8 illustre schématiquement une machine grâce à laquelle le flacon selon l'invention peut être fabriqué.
La figure 9 illustre en vue de face les dispositifs placés au niveau d'un poste de pose des étiquettes d'une machine particulière.
La figure 10 illustre en perspective les dispositifs de la figure 8, le moyen de transfert étant cette fois-ci en position pour introduire les étiquettes dans les empreintes de matrices.
La figure 11 illustre schématiquement le voisinage d'un mandrin utilisé pour transférer l'étiquette d'une zone de stockage vers la cavité de moulage, peu de temps avant que l'étiquette soit conformée autour du mandrin.
La figure 12a illustre schématiquement un ensemble de moulage destiné à réaliser un fond sensiblement plat et une paroi latérale après dépôt d'une étiquette dans l'empreinte de la matrice.
La figure 12b détaille le schéma de la figure 12a dans la partie périphérique de l'empreinte qui se trouve au voisinage de la liaison entre ledit fond et ladite paroi latérale.

### DESCRIPTION DETAILLEE DE l'INVENTION

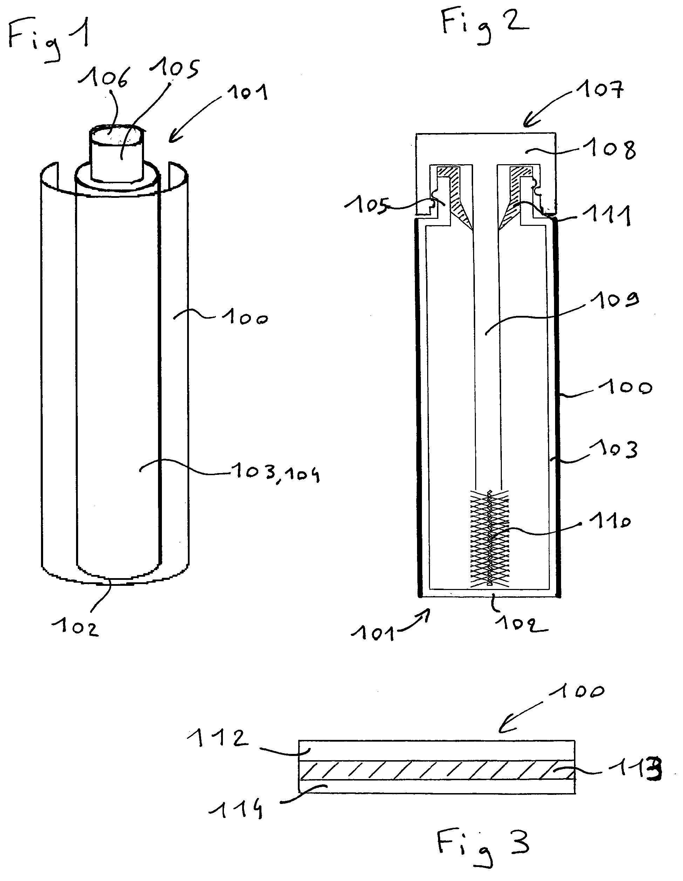

On a représenté sur la figure 1 une étiquette 100 déroulée autour d'un flacon 101 destiné à recevoir un produit cosmétique et visible par transparence à travers l'étiquette 100. Le flacon comporte un fond 102, une paroi latérale 103 dont est visible la surface latérale extérieure 104 et un goulot 105 comportant une ouverture 106. Les produits cosmétiques, et notamment le mascara, comportent de plus en plus de solvants volatiles non polaires, notamment de type alcool ou hydrocarboné tel que l'isododécane. L'étiquette est en outre choisie pour ses propriétés barrières à un ou des solvants volatiles contenus dans le produit cosmétique et est destinée à être collée sur la surface latérale extérieure du flacon 101 pour former le flacon.

Comme les flacons de mascara ont généralement un diamètre avoisinant les 17 mm pour une longueur avoisinant les 80 mm, la paroi latérale représente environ 90% de la surface d'échange du flacon, de sorte qu'empêcher l'évaporation des solvants volatiles par cette paroi latérale au moyen de l'étiquette revient à limiter 90% de l'évaporation du solvant volatile par rapport à un flacon classique.

Les flacons selon l'invention permettent de respecter à moindre coûts les exigences en matière de conservation du mascara dans son emballage régulièrement fixées à une perte en poids maximum de 3% du solvant volatile après stockage pendant 3 mois à 40°C.

On a représenté sur la figure 2 un distributeur de mascara comportant le flacon 101 avec sa paroi latérale 103 recouverte de l'étiquette 100 et un applicateur de mascara 107 venant se visser sur le goulot 105 pour fermer l'ouverture 106 et constitué d'un moyen de préhension 108, d'une tige 109 et d'un moyen d'application du mascara 110. Un essoreur 111 est en outre inséré en dans l'ouverture 106 du goulot 105. L'étiquette 100 recouvre avantageusement toute la surface latérale 104 extérieure du flacon 101.

Comme visible sur la figure 3, l'étiquette comporte une couche externe 112 de décoration et/ou de protection, une couche intermédiaire 113 barrière au solvant volatile et une couche interne 114 adhésive. La couche intermédiaire 113 barrière est de préférence une couche d'aluminium qui forme une barrière totale aux solvants volatiles, mais également à l'eau, cette couche d'aluminium ayant par exemple une épaisseur de 6.5 à 65µm et de préférence de 8 à 12 µm.

La couche intermédiaire barrière peut encore être formée par un film métallisé, par exemple un film couvert d'un revêtement de SiOx de 10 à 100 nanomètres d'épaisseur déposé par déposition physique en phase vapeur.

La couche intermédiaire barrière peut toutefois être également formée par un matériau polymère connu pour ses propriétés barrières aux solvants volatiles telle qu'une couche d'EVOH.

La couche interne 114 adhésive est constituée de la même matière que la paroi latérale ou d'une matière compatible avec la matière de la paroi latérale. Une couche adhésive 114 en PE est par exemple utilisée lorsque la paroi latérale 103 est en PEHD. L'adhésion entre l'étiquette et la paroi latérale est par conséquent très forte et il n'y a pas de risque de délamination ou décollement de cette étiquette, même après une longue période.

La couche externe est de préférence une couche de Polyéthylène téréphtalate (PET), de polyethylène (PE) ou de polypropylène (PP), portant une impression sur sa face en regard de la couche intermédiaire. De telles couches externes sont communément utilisées pour la décoration et la protection d'emballages flexibles. Des décorations de qualité peuvent être obtenues sur de telles couches externes par fléxographie ou héliogravure qui offrent de vastes opportunités en termes de coloration ou de finesse.

Le flacon 101 est avantageusement moulé en PEHD du fait que le PEHD présente un coût raisonnable et est inerte et donc compatible avec les composés utilisés dans les formulations de produit cosmétique. Le PEHD présente en outre de bonnes propriétés barrières à l'eau de sorte qu'un flacon comportant une paroi en PEHD recouverte d'une étiquette barrière aux solvants volatiles présente des propriétés barrières universelles, c'est-à-dire à la fois à l'eau et aux solvants volatiles, et peut recevoir tout type de produit cosmétique sans qu'il soit nécessaire de se soucier de l'évaporation du produit cosmétique. Par bonnes propriétés barrières à l'eau, on entend dans le domaine du mascara que de l'eau enfermée pendant 3 mois à 40°C dans la matière plastique testée subit une perte de poids maximale à 2%.

Le flacon 101 peut également être moulé en Polyacide lactique (PLA) appréciable pour ses propriétés de biodégradabilité et pour sa compatibilité avec les solvants volatiles.

D'autres matières plastiques peuvent également être utilisées cosmétique pour mouler le flacon 101 après détermination de leur compatibilité avec le produit cosmétique telles que par exemple du PP, du PE, des matières biodégradables telles que par exemple le Polyhydroxyalcanoate (PHA), le polyhydroxybutyrate (PHB), le polyhydroxyvalérateate (PHV), les dérivés de l'amidon, les dérivés de l'acide succinique, des mélanges de PP/matière biodégradable et des mélanges de PE/matière biodégradable.

Des essais ont été réalisés pour montrer l'étanchéité des flacons 101 selon l'invention. Des flacons cylindriques en PEHD (référence produit MG9601 de la société Borealis) de 77mm de hauteur pour 15mm de diamètre ont été remplis avec 5ml d'eau ou 5ml d'isododécane, fermé hermétiquement, puis soumis à une température de 40°C pendant 3 mois. Les pertes en poids en eau et en isododécane ont été respectivement de 0.8% et de 9.9%. Les mêmes flacons avec la surface latérale extérieure couverte par une étiquette comportant une couche d'aluminium ont subit la même expérimentation et les pertes en poids en eau et en isododécane ont été respectivement de 0.1% et de 1.9%. L'évaporation en eau et en isododécane a été fortement diminuée avec le flacon selon l'invention. Un tel flacon selon l'invention peut par conséquent être utilisé sans modification pour recevoir au choix un mascara à base d'eau ou un mascara à base d'isododécane.

Pour améliorer encore les propriétés barrières du flacon au solvant volatile sans modifier la constitution avantageusement économique et pratique de la paroi latérale 103, l'invention joue sur les propriétés barrières des seules parties du flacon 101 non recouvertes par l'étiquette 100, c'est-à-dire le goulot 105 et/ou sur le fond 102, encore définis par le terme les extrémités.

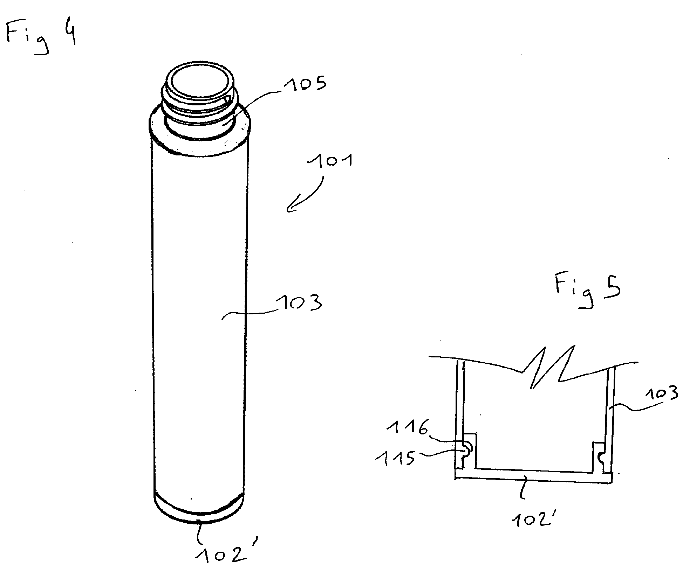

Ainsi, deux autres modes de réalisation selon l'invention sont présentés dans respectivement les figures 4,5 et les figures 6,7.

Comme visible sur les figures 4 et 5 qui montrent le flacon 101 dépourvu de l'étiquette 100 pour des raisons de clarté, le flacon 101 comporte un fond 102' rapporté sur une ouverture à la base de la paroi latérale 103 ; c'est-à-dire que le fond du flacon est constitué par un élément distinct 102' qui n'a pas été moulé avec la paroi latérale 103. Le fond 102' est fixé à la base de la paroi latérale 103 par exemple par encliquetage d'un bourrelet 115 formé sur la paroi latérale 103 et d'une rainure 116 formée sur une patte du fond 102'. La fixation doit assurer une parfaite étanchéité. D'autres moyens de fixation peuvent bien évidemment être utilisés tels que le collage, le soudage, le vissage...

Le fond 102' a été moulé en une matière plastique possédant de bonnes propriétés barrière au solvant volatile du produit cosmétique et plus particulièrement en une matière plastique différente de la matière plastique de la paroi latérale et possédant des propriétés barrières au solvant volatile supérieures à la matière plastique de la paroi latérale.

La matière plastique du fond 102' a des propriétés barrières élevées, de sorte que le solvant volatile enfermé dans cette matière plastique pendant 3 mois à 40°C subit une perte de poids inférieure à 3%.

La matière plastique du fond 102' est plus particulièrement choisie parmi une résine acétale, du PET, un mélange de PEHD/EVOH ou du polyéthylène ayant subit une fluorisation et du PVC.

En empêchant l'évaporation du solvant volatile par la paroi latérale 103 à l'aide de l'étiquette 100 et par le fond 102' en choisissant une matière appropriée, on obtient un flacon parfaitement adapté aux exigences dans le domaine des produits cosmétiques et plus particulièrement dans le domaine du mascara.

Selon un mode de réalisation préféré de l'invention, le fond 102' est constitué d'un mélange de PEHD/EVOH, la paroi latérale 103 est constituée de PEHD et l'étiquette 100 comporte une couche d'aluminium.

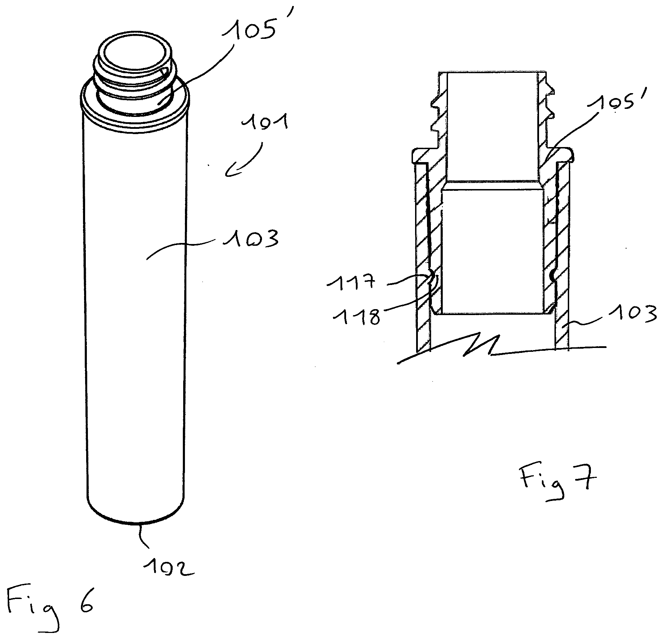

Comme visible sur les figures 6 et 7 qui montrent le flacon 101 dépourvu de l'étiquette 100 pour des raisons de clarté, le flacon 101 comporte un goulot 105' rapporté sur une ouverture au sommet de la paroi latérale 103 ; c'est-à-dire que le goulot du flacon est constitué par un élément distinct 105' qui n'a pas été moulé avec la paroi latérale 103. Le goulot 105' est fixé à la paroi latérale 103 par exemple par encliquetage d'un bourrelet 117 formé sur la paroi latérale 103 et d'une rainure 118 formée sur le goulot 105'. La fixation doit assurer une parfaite étanchéité. D'autres moyens de fixation peuvent bien évidemment être utilisés tels que le collage, le soudage, le vissage...

Le goulot 105' a été moulé en une matière plastique possédant de bonnes propriétés barrière au solvant volatile du produit cosmétique et plus particulièrement en une matière plastique différente de la matière plastique de la paroi latérale 103 et possédant des propriétés barrières au solvant volatile supérieures à la matière plastique de la paroi latérale 103.

La matière plastique du goulot 105' a des propriétés barrières élevées, de sorte que le solvant volatile enfermé dans cette matière plastique pendant 3 mois à 40°C subit une perte de poids inférieure à 3%.

La matière plastique du goulot 105' est plus particulièrement choisie parmi une résine acétale, du PET, un mélange de PEHD/EVOH ou du polyéthylène ayant subit une fluorisation et du PVC.

En empêchant l'évaporation du solvant volatile par la paroi latérale 103 à l'aide de l'étiquette 100 et par le goulot 105' en choisissant une matière appropriée, on obtient un flacon parfaitement adapté aux exigences dans le domaine des produits cosmétiques et plus particulièrement dans le domaine du mascara.

Selon un mode de réalisation préféré de l'invention, le goulot 105' est constitué d'un mélange de PEHD/EVOH, la paroi latérale 103 est constituée de PEHD et l'étiquette 100 comporte une couche d'aluminium.

Bien évidemment, pour une plus grande efficacité, il est également possible de rapporter à la fois un goulot 105' et un fond 102' sur une paroi latérale 103 recouverte d'une étiquette 100.

Nous allons exposer ci-après à titre d'exemple un procédé particulièrement avantageux pour fabriquer le produit selon l'invention et plus particulièrement le flacon 101 illustré par les figures 6 et 7.

On connait déjà, dans d'autres domaines que les flacons de mascara, des corps en matière plastique dont la surface extérieure est munie d'une étiquette. Ces étiquettes peuvent être appliquées sur la surface extérieure au moyen d'un procédé dit "in-mold labelling" (IML), parfois traduit en français par "étiquetage au moulage" ou "étiquetage intra-moule", mais que nous préférons appeler par la suite moulage d'étiquette dans le moule. Elle est particulièrement intéressante pour la réalisation de flacons en matière plastique, ayant une paroi latérale recouverte par une étiquette, ladite paroi latérale s'étendant selon une surface de révolution d'axe perpendiculaire, tel qu'un cylindre ou un tronc de cône au plan du fond. Elle s'adresse plus particulièrement encore à des récipients ou flacons dont les dimensions sont relativement petites, à savoir un diamètre compris entre 13 et 60 mm et une hauteur comprise entre 40 et 200 mm et dont la paroi latérale est recouverte entièrement, ou presque entièrement par ladite étiquette.

Le moulage est effectué par injection de matière plastique dans un moule comportant au moins deux parties mobiles l'une par rapport à l'autre, dont le rapprochement permet de réaliser la cavité de moulage et dont l'éloignement permet d'éjecter la pièce moulée. Pour les flacons axisymétriques plus spécifiquement visés, le moule comprend une partie femelle ou matrice comportant au moins une empreinte en creux correspondant à la forme externe du flacon, et une partie mâle ou poinçon comportant au moins une empreinte en relief correspondant à la face interne dudit flacon.

De manière à rendre la présente invention viable économiquement en utilisant une technique de moulage d'étiquette dans le moule, il est possible d'utiliser un procédé de fabrication qui permet d'assurer un temps de cycle de fabrication de tels flacons aussi court que possible. Il est par ailleurs intéressant que ce procédé puisse assurer de manière répétitive un positionnement précis de l'étiquette, en particulier lorsque celle-ci doit recouvrir entièrement la paroi latérale du flacon.

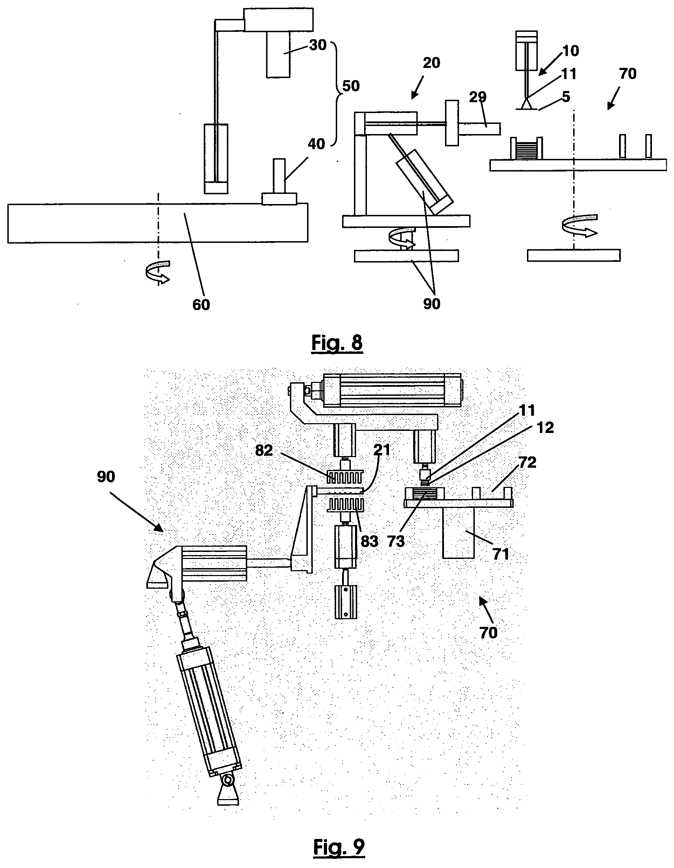

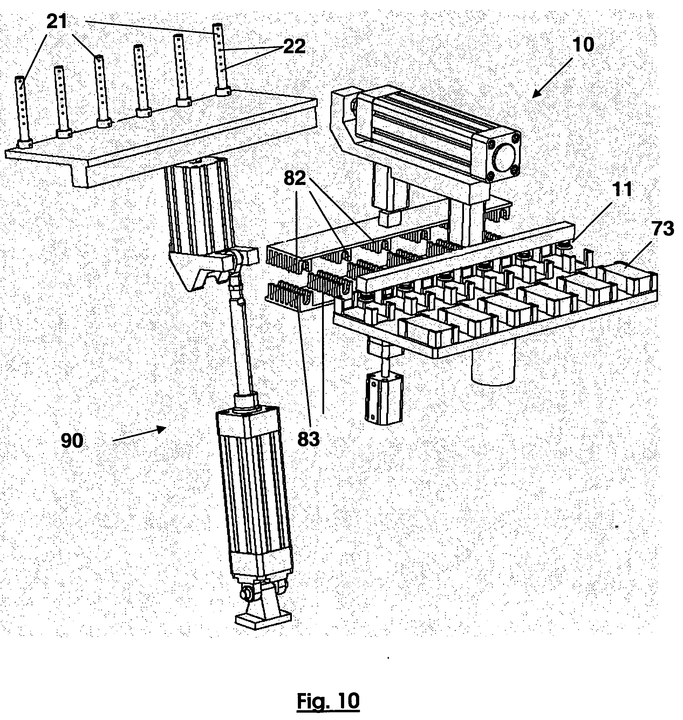

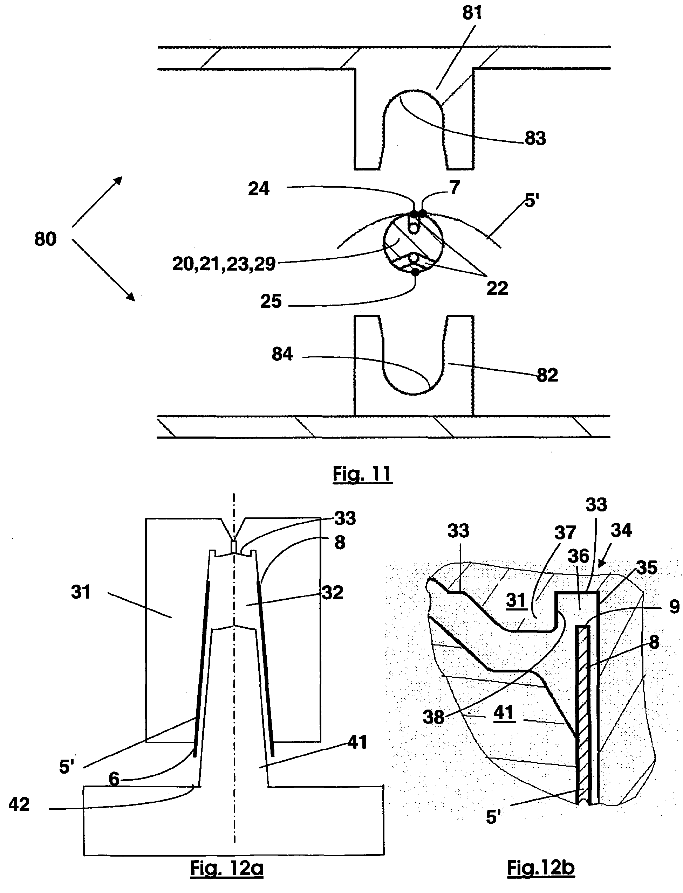

Il est possible pour cela d'utiliser, à titre d'exemple non limitatif, le procédé de fabrication décrit ci-dessous et illustré par les figures 7 à 12b.

Pour mouler des flacons de mascara ayant un fond sensiblement plat et une paroi latérale axisymétrique ou quasi-cylindrique entièrement recouverte d'une étiquette, on utilise une machine qui comprend:
- un plateau rotatif 60 indexé fonctionnant pas à pas et subdivisé en six secteurs pour desservir six postes de travail. Sur ce plateau sont montés, dans chacun des six secteurs, six ensembles de moulage 50, comprenant chacun six matrices 31, regroupées dans un ensemble porte-matrices 30 et six poinçons 41 regroupés dans un ensemble porte-poinçons 40; les poinçons et les matrices se présentent ici en rateau, alignés de sorte que leurs axes soient parallèles entre et équidistants;
- une presse à injecter (non illustrée), placée en un des postes de travail du plateau rotatif,
- un dispositif de pose des étiquettes situé en amont de la presse à d'injecter, schématisé en figure 1 et détaillé en figures 2 et 3, comprenant six mandrins 21 solidaires et placés en rateau avec une distance entre leurs axes identiques à celle des matrices et des poinçons, chacun agissant comme un moyen de transfert 20 des étiquettes mû par un premier actionneur 90, lequel est en fait un ensemble de vérins et de moteurs rotatifs permettant de présenter les mandrins 21 sensiblement horizontalement pour qu'ils reçoivent les étiquettes 5 et de présenter ceux-ci sensiblement verticalement pour qu'ils puissent être introduits, munis de leurs étiquettes, à l'intérieur des empreintes 32 des matrices 31, l'ensemble de moulage 50 étant ouvert au niveau dudit poste de pose des étiquettes, de façon à ce que l'on puisse déposer lesdites étiquette dans lesdites empreintes.

L'alimentation en étiquettes est assurée par une table rotative 71 comprenant deux magasins 72 et 73 diamétralement opposés, l'un (72) prêt à être rempli, l'autre (73), comprenant six piles d'étiquettes est placé sous six vérins à ventouse 11, chacun agissant en tant que moyen de prélèvement 10 des étiquettes. L'ensemble des vérins à ventouse 11 peut être déplacé au-dessus d'une zone où les mandrins 21, actionnés par l'actionneur 90, sont placés horizontalement pour accueillir chacun une étiquette 5'.

Les étiquettes 5' ont été découpées dans une feuille souple multicouche en matière plastique, comprenant une couche externe imprimée en quadrichromie par fléxographie et une couche d'aluminium formant barrière à la diffusion des gaz. Elles ont une largeur supérieure, de l'ordre de 1mm, à la circonférence de la paroi latérale du flacon à réaliser. Elles ont une longueur supérieure, de l'ordre de 1 mm, à la hauteur de la paroi latérale du flacon à réaliser.

Les étiquettes 5' sont présentées de sorte qu'elles arrivent légèrement déséquilibrées sur leurs mandrins 21: leur axe médian 7 fait avec la génératrice supérieure 24 du mandrin associé un angle voisin de 10° (mesuré dans un plan perpendiculaire à l'axe du mandrin).

Les mandrins 21 sont cylindriques avec des sections de diamètres inférieurs de 0,5 mm à ceux des matrices. Chaque mandrin 21 est muni de canaux 22 débouchant sur sa surface et dans lesquels de l'air peut être aspiré ou soufflé. Tout en aspirant de l'air par les canaux 22 des mandrins 21, on libère les étiquette 5' des ventouses 11 et celles-ci viennent reposer sur la génératrice supérieure 24 des mandrins 21 placés horizontalement. Pour conformer les étiquettes 5' sur les mandrins 21, on fait descendre 6 demi-coquilles supérieures 83, disposées également en rateau, qui plaquent les étiquettes sur la partie supérieure des mandrins. On poursuit la mise en forme de l'étiquette en faisant monter les 6 demi-coquilles inférieures 83. Au cours de cette montée, pour chaque étiquette, les bords suivent la paroi de la surface creuse 84 de la demi-coquille inférieure 83 jusqu'à ce qu'ils se recouvrent sur un millimètre environ. La configuration géométrique finale de l'étiquette ainsi conformée est telle que les bords ou toute autre partie de l'étiquette ne touchent pas la paroi de l'empreinte de la matrice lors de l'introduction du mandrin dans l'empreinte de la matrice.

On enlève les demi-coquilles tout en maintenant l'aspiration de l'air à travers les mandrins 21. A l'aide du premier actionneur 90, on déplace les mandrins 21 en direction du plateau rotatif et des 6 ensembles de moulage 50, maintenus en position ouverte. On introduit les six mandrins 21 dans les 6 empreintes 32 des matrices 31 en maintenant une puissance d'aspiration suffisante pour que les étiquettes soient maintenues ainsi conformées.

Chaque mandrin 21 est muni de trois rangées de canaux 22 débouchants, une rangée alignée sur la génératrice supérieure 24 dudit mandrin et deux rangées alignées suivant des génératrices symétriques par rapport au plan diamétral vertical dudit mandrin, le bord le plus proche des orifices étant situé à une distance voisine de 3 mm de la génératrice inférieure 25. Les orifices sont disposés régulièrement sur lesdites génératrices, à une distance voisine de 3 mm les uns des autres. En aspirant l'air avec une dépression de l'ordre de 4 à 5 bars, on arrive à maintenir lesdites étiquettes plaquées sur leurs mandrins et à introduire celles-ci à l'intérieur des empreintes des matrices sans qu'il y ait collision.

Lorsque les mandrins 21 ont pénétré dans les empreintes 32 à une profondeur prédéterminée, on inverse le sens de circulation de l'air dans les canaux 22 des mandrins 21 de façon à ce que les étiquettes se déroulent et que leurs bords viennent au contact des parois latérales des empreintes 32.

La profondeur prédéterminée de pénétration des mandrins dans les empreintes est définie pour que, lorsque celle-ci est atteinte, les extrémités des étiquettes débordent des empreintes des matrices d'une distance voisine de 1 mm.

Les poinçons 41 ont une surface latérale qui est munie à la base d'un épaulement 42 formant plan de joint avec la matrice 31 associée. L'épaulement est placé à une distance telle que, lors du rapprochement du poinçon 41 et de la matrice 31, l'extrémité débordante 6 de l'étiquette 5' arrive en butée contre ledit épaulement 42 et est entraînée par celui-ci en direction du fond 33 de la matrice 31 jusqu'à occuper sa position finale.

Lorsque le poinçon 41 et la matrice 31 sont accolés en vue de former la cavité de moulage, la deuxième extrémité 8 de l'étiquette déborde du poinçon 41 dans la cavité de moulage. La partie périphérique 34 de l'empreinte a la forme suivante:
- en périphérie, la paroi latérale 35 de l'empreinte au regard du poinçon 41 reste sensiblement axiale;
- lorsque la matrice 31 et le poinçon 41 sont au contact l'un de l'autre, le fond 33 de l'empreinte 32 de la matrice 31 se trouvant au droit de la paroi latérale se trouve à une profondeur supérieure à la hauteur débordante de la deuxième extrémité 8 de l'étiquette, de sorte que ladite deuxième extrémité n'arrive pas en butée sur le fond de ladite empreinte de matrice et que, lors de l'injection, la matière plastique, injectée en un point situé près de l'axe, doit s'écouler radialement dans une zone périphérique annulaire 36 située au-dessus de la tranche sommitale de ladite portion d'extrémité;
- le fond de la matrice présente un bossage annulaire 37 qui fait obstacle à l'écoulement de la matière plastique vers ladite zone périphérique annulaire 36, le bord extérieur 38 dudit bossage annulaire 37 et le bord intérieur de ladite deuxième extrémité se trouvant l'un de l'autre distants d'une valeur inférieure à l'épaisseur moyenne dudit fond.

Les ensembles de moulage sont ensuite fermés et verrouillés et le plateau rotatif tourne de sorte que les ensembles de moulage arrivent au poste de moulage. En aval, deux postes sont consacrés au refroidissement des éléments ainsi moulés et un poste est consacré à l'éjection des éléments moulés après que les dispositifs de moulage aient été ouverts. Un dispositif de manoeuvre assurant l'ouverture, la fermeture et le verrouillage des parties mobiles des ensembles de moulage est placé dans chaque secteur du plateau rotatif, associé aux six poinçons et aux six matrices. Ainsi, cette opération peut se faire en temps masqué, indépendamment du temps d'immobilisation à chaque poste.

Avec une telle machine, on réalise facilement, à un rythme nettement supérieur par rapport à une injection standard, des cuves à mascara dont la paroi latérale comprise entre 0,6 et 1,5 mm, est entièrement recouverte d'une étiquette.

Selon encore un autre mode de réalisation avantageux du flacon, le fond 102 du flacon 101 de la figure 1 peut être en outre recouvert d'une seconde étiquette ayant des propriétés barrières au solvant volatile. Le fond formant généralement une surface extérieure plane, la fixation de la seconde étiquette sur le fond peut être effectuée de façon simple. L'évaporation des solvants volatiles contenus dans le flacon 101 est alors avantageusement empêchée au niveau de la paroi latérale 103 par l'étiquette 100 recouvrant la surface latérale extérieure 104 et par le fond 102 par cette seconde étiquette. Cette seconde étiquette a par exemple des caractéristiques physiques et des propriétés identiques à celles de l'étiquette 100. Le fond 102 peut quant à lui présenter des caractéristiques physiques identiques à celles de la paroi latérale.

Le fond 102 et la paroi latérale 103 peuvent par exemple avoir été moulés ensemble avec l'étiquette 100 et de la seconde étiquette. L'étiquette 100 et la seconde étiquette peuvent former une seule étiquette ou deux étiquettes distinctes.

Le fond 102 et la paroi latérale 103 peuvent encore avoir été moulés ensemble avec l'étiquette 100 uniquement. La seconde étiquette peut alors être collée ultérieurement, par exemple lors du remplissage du flacon pour référencer le flacon.

La paroi latérale 103 peut encore être moulée avec l'étiquette 100 séparément du fond qui est moulé avec la seconde étiquette, puis le fond 102 rapporté sur la paroi latérale 103.

## Revendications

1. Flacon (101) pour produit cosmétique contenant au moins un solvant volatile, notamment pour mascara, comprenant une ouverture (106) et une paroi latérale (103) rigide moulée en une matière plastique comprenant une surface latérale intérieure en contact avec ledit produit cosmétique et une surface latérale extérieure (104) sur laquelle est fixée une étiquette (100), **caractérisé en ce que** ladite étiquette (100) présente des propriétés barrières au solvant volatile, et **en ce que** le flacon comprend une paroi latérale et au moins une extrémité (102', 105'), dans lequel la paroi latérale et ladite extrémité sont constituées de matières plastiques différentes, la matière plastique de ladite extrémité ayant des propriétés barrières au solvant volatile supérieures à la matière plastique de la paroi latérale.

2. Flacon selon la revendication 1, dans lequel l'étiquette recouvre toute ladite surface latérale extérieure.

3. Flacon selon l'une des revendications précédentes, dans lequel l'étiquette comporte une couche externe (112) de décoration et/ou de protection, une couche intermédiaire (113) barrière au solvant volatile et une couche interne (114) adhésive.

4. Flacon selon la revendication 3, dans lequel la couche intermédiaire barrière comprend une barrière physique.

5. Flacon selon la revendication 4, dans lequel la barrière physique est une couche d'aluminium.

6. Flacon selon la revendication 3, dans lequel la couche intermédiaire barrière comprend un polymère barrière.

7. Flacon selon la revendication 6, dans lequel le polymère barrière est choisi parmi une résine acétate, du PET, du PVC, un mélange de PEHD/EVOH, du polyéthylène ayant subit une fluorisation, et de l'EVOH.

8. Flacon selon la revendication 4, dans lequel la barrière physique comprend un film métallisé.

9. Flacon selon l'une des revendications 3 à 8, dans lequel la couche externe est une couche de Polyéthylène téréphtalate (PET), polyéthylène (PE), polypropylène (PP), portant une impression sur sa face en regard de la couche intermédiaire et dans lequel la couche adhésive est constituée de la même matière que la paroi latérale ou d'une matière compatible avec la matière de la paroi latérale.

10. Flacon selon l'une des revendications 1 à 9, dans lequel ladite extrémité forme le fond (102') du flacon.

11. Flacon selon l'une des revendications 1 à 10, dans lequel la matière plastique de l'extrémité a des propriétés barrières élevées, de sorte que du solvant volatile enfermé dans une telle matière plastique pendant 3 mois à 40°C subit une perte de poids inférieure à 3%.

12. Flacon selon l'une des revendications 1 à 11, dans lequel la base de la matière plastique de ladite extrémité est choisie parmi une résine acétale, du PET, un mélange de PEHD/EVOH, du polyéthylène ayant subit une fluorisation et du PVC.

13. Distributeur de mascara, comprenant :
- un flacon selon l'une des revendications précédentes destiné à recevoir du mascara ;
- un essoreur disposé dans l'ouverture du flacon ; et
- un moyen de fermeture de ladite ouverture comprenant un moyen de préhension, une tige et un moyen d'application du mascara.

14. Procédé de fabrication d'un flacon pour produit cosmétique selon l'une des revendications précédentes, comportant des solvants volatiles, notamment pour mascara, ayant au moins une portion de paroi latérale en matière plastique moulée recouverte par une étiquette, **caractérisé en ce qu'**il comprend les étapes consistant à :
- fournir une étiquette présentant des propriétés barrières aux solvants volatiles et comportant une couche externe de décoration ou de protection, une couche intermédiaire barrière aux solvants volatiles et une couche interne adhésive ;
- insérer ladite étiquette dans un moule ;
- injecter ladite matière plastique dans le moule de manière à réaliser un moulage d'étiquette dans le moule.

## Patentansprüche

1. Fläschchen (101) für Kosmetikprodukt, das mindestens ein flüchtiges Lösemittel enthält, insbesondere für Wimperntusche, das eine Öffnung (106) und eine starre Seitenwand (103) umfasst, die aus einem Kunststoff geformt ist, die eine innere Seitenfläche in Berührung mit dem Kosmetikprodukt und eine äußere Seitenfläche (104), auf der ein Etikett (100) befestigt ist, umfasst, **dadurch gekennzeichnet, dass** das Etikett (100) Barriereneigenschaften gegenüber dem flüchtigen Lösemittel aufweist, und dass das Fläschchen eine Seitenwand und mindestens ein Ende (102', 105') umfasst, wobei die Seitenwand und die Enden aus unterschiedlichen Kunststoffen bestehen, wobei der Kunststoff des Endes Barriereneigenschaften gegenüber dem flüchtigen Lösemittel hat, die höher sind als die des Kunststoffs der Seitenwand.

2. Fläschchen nach Anspruch 1, wobei das Etikett die gesamte äußere Seitenoberfläche bedeckt.

3. Fläschchen nach einem der vorhergehenden Ansprüche, wobei das Etikett mindestens eine äußere Dekor- oder Schutzschicht (112), eine Barrierenzwischenschicht (113) gegenüber dem flüchtigen Lösemittel und eine innere Klebeschicht (114) umfasst.

4. Fläschchen nach Anspruch 3, wobei die Barrierenzwischenschicht eine physische Barriere umfasst.

5. Fläschchen nach Anspruch 4, wobei die physische Barriere eine Aluminiumschicht ist.

6. Fläschchen nach Anspruch 3, wobei die Barrierenzwischenschicht ein Barrierenpolymer umfasst.

7. Fläschchen nach Anspruch 6, wobei das Barrierenpolymer ausgewählt ist aus einem Acetatharz, PET, PVC, einem Gemisch aus PEHD/EVOH, Polyäthylen, das einer Fluoridierung unterworfen wurde, und EVOH.

8. Fläschchen nach Anspruch 4, wobei die physische Barriere eine metallisierte Folie umfasst.

9. Fläschchen nach einem der Ansprüche 3 bis 8, wobei die äußere Schicht eine Polyäthylenterephtalat- (PET), Polyäthylen- (PE), Polypropylen-(PP)-Schicht ist, die auf ihrer Seite gegenüber der Zwischenschicht einen Aufdruck trägt, und wobei die Klebeschicht aus demselben Material besteht wie die Seitenwand, oder aus einem Material, das mit dem Material der Seitenwand kompatibel ist.

10. Fläschchen nach einem der Ansprüche 1 bis 9, wobei das Ende den Boden (102') der Flasche bildet.

11. Fläschchen nach einem der Ansprüche 1 bis 10, wobei der Kunststoff des Endes hohe Barriereneigenschaften hat, so dass flüssiges Lösemittel, das in einem solchen Kunststoff während 3 Monaten bei 40 °C eingeschlossen ist, einen Gewichtsverlust von weniger als 3 % erfährt.

12. Fläschchen nach einem der Ansprüche 1 bis 11, wobei die Basis des Kunststoffs des Endes ausgewählt ist aus einem Acetalharz, PET, einem Gemisch aus PEHD/EVOH, Polyethylen, das eine Fluoridierung erhalten hat, und PVC.

13. Wimperntuscheverteiler, der Folgendes umfasst:
- ein Fläschchen nach einem der vorhergehenden Ansprüche, das dazu bestimmt ist, Wimperntusche aufzunehmen,
- einen Abstreifer, der in der Öffnung des Fläschchens angeordnet ist, und
- ein Mittel zum Verschließen der Öffnung, das ein Greifmittel, einen Schaft und ein Mittel zum Auftragen der Wimperntusche umfasst.

14. Herstellungsverfahren eines Fläschchens für Kosmetikprodukt nach einem der vorhergehenden Ansprüche, das flüchtige Lösemittel umfasst, insbesondere für Wimperntusche, das mindestens einen Seitenwandabschnitt aus geformtem Kunststoff hat, der durch ein Etikett abgedeckt ist, **dadurch gekennzeichnet, dass** es die Schritte umfasst, die aus Folgendem bestehen:
- Liefern eines Etiketts, das Barriereneigenschaften gegenüber flüchtigen Lösemitteln aufweist und eine äußere Dekor- oder Schutzschicht, eine Barrierenzwischenschicht gegenüber flüchtigen Lösemitteln und eine innere Klebeschicht,
- Einfügen des Etiketts in eine Form,
- Einspritzen des Kunststoffs in die Form derart, dass ein Etikettenformen in der Form ausgeführt wird.

## Claims

1. Bottle (101) for a cosmetic product containing at least one volatile solvent, in particular for mascara, comprising an opening (106) and a rigid lateral wall (103) moulded from a plastics material, comprising an internal lateral surface in contact with said cosmetic product and an external lateral surface (104) to which a label (100) is fixed,
**characterised in that** said label (100) has barrier properties with respect to the volatile solvent, and **in that** the bottle comprises a lateral wall and at least one end (102', 105'), wherein the lateral wall and said end are formed from different plastics materials, the plastics material of said end having barrier properties with respect to the volatile solvent greater than the plastics material of the lateral wall.

2. Bottle according to claim 1, in which the label covers the entire said external lateral surface.

3. Bottle according to one of the preceding claims, in which the label comprises an external decorative and/or protective layer (112), an intermediate layer (113) that is a barrier to the volatile solvent, and an adhesive internal layer (114).

4. Bottle according to claim 3, in which the intermediate barrier layer comprises a physical barrier.

5. Bottle according to claim 4, in which the physical barrier is a layer of aluminium.

6. Bottle according to claim 3, in which the intermediate barrier layer comprises a barrier polymer.

7. Bottle according to claim 6, in which the barrier polymer is chosen from an acetate resin, PET, PVC, a mixture of HDPE/EVOH, polyethylene that has undergone fluoridation, and EVOH.

8. Bottle according to claim 4, in which the physical barrier comprises a metallised film.

9. Bottle according to one of claims 3 to 8, in which the external layer is a layer of polyethylene terephthalate (PET), polyethylene (PE) or polypropylene (PP), bearing an impression on its face facing the intermediate layer and in which the adhesive layer is formed from the same material as the lateral wall or a material compatible with the material of the lateral wall.

10. Bottle according to one of claims 1 to 9, in which said end forms the bottom (102') of the bottle.

11. Bottle according to one of claims 1 to 10, in which the plastics material of the end has high barrier properties, so that volatile solvent enclosed in such a plastics material for three months at 40°C suffers a loss of weight of less than 3%.

12. Bottle according to one of claims 1 to 11, in which the basis of the plastics material of said end is chosen from an acetyl resin PET, a mixture of HDPE/EVOH, polyethylene that has undergone fluoridation, and PVC.

13. Mascara dispenser, comprising:
- a bottle according to one of the preceding claims, intended to receive mascara;
- a squeegee device disposed in the bottle opening; and
- a means for closing said opening, comprising a gripping means, a stem and a means for applying mascara.

14. Method for manufacturing a bottle for a cosmetic product according to one of the preceding claims, comprising volatile solvents, in particular for mascara, having at least one lateral wall portion made from moulded plastics material covered by a label, **characterised in that** it comprises the steps consisting of:
- providing a label having barrier properties with respect to volatile solvents and comprising an external decorative or protective layer, an intermediate layer forming a barrier to volatile solvents and an adhesive internal layer;
- inserting said label in a mould;
- injecting said plastics material into the mould so as to carry out a label moulding in the mould.
